(19) **Europäisches Patentamt / European Patent Office / Office européen des brevets**

(11) **EP 2 497 672 B1**

(12) **FASCICULE DE BREVET EUROPEEN**

(45) Date de publication et mention
de la délivrance du brevet:
**25.07.2018 Bulletin 2018/30**

(51) Int Cl.:
*B60W 50/14* (2012.01)   *B60W 40/09* (2012.01)
*F16H 63/42* (2006.01)   *B60K 35/00* (2006.01)
*B60R 16/023* (2006.01)   *F16H 59/00* (2006.01)
*F16H 61/02* (2006.01)

(21) Numéro de dépôt: **12305286.2**

(22) Date de dépôt: **09.03.2012**

(54) **Procédé d'aide à une conduite économique en énergie d'un véhicule automobile**

Hilfsverfahren zum energiesparenden Fahren eines Kraftfahrzeugs

Assistance method for fuel-saving driving of an automobile

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.03.2011 FR 1100722**

(43) Date de publication de la demande:
**12.09.2012 Bulletin 2012/37**

(73) Titulaire: **Renault S.A.S.
92100 Boulogne-Billancourt (FR)**

(72) Inventeur: **Daumard, Alain
92220 BAGNEUX (FR)**

(56) Documents cités:
**EP-A1- 2 011 696       EP-A1- 2 116 438
EP-A2- 1 930 631       EP-A2- 2 105 338
JP-A- 2010 041 750     US-A- 4 335 429
US-A- 5 832 400**

**Description**

DOMAINE TECHNIQUE AUQUEL SE RAPPORTE L'INVENTION

La présente invention concerne un procédé d'aide à une conduite économique en énergie d'un véhicule automobile.

Elle concerne également un dispositif permettant la mise en oeuvre de ce procédé.

L'invention trouve une application à tout type de véhicule automobile, comportant un moteur à combustion interne, un moteur électrique ou une motorisation hybride.

ARRIERE-PLAN TECHNOLOGIQUE

On connaît des procédés d'aide à une conduite économique selon lesquels un signal représentatif de la consommation instantanée du véhicule est affiché sur le tableau de bord du véhicule, de manière à inciter le conducteur à modifier sa manière de conduire pour réduire la valeur de la consommation affichée. Un procédé d'aide à la conduite tel que défini par le préambule de la revendication 1 est connu de JP 2010 041750 ou de US 4 335 429 A. On affiche notamment un signal particulier au conducteur lorsque la consommation dépasse un seuil arbitraire au-delà duquel la conduite n'est plus considérée comme économique en énergie.

Cette méthode présente l'inconvénient d'être peu précise et peu pratique pour le conducteur, car la valeur représentative de la consommation ne prend pas en compte les conditions environnementales de la conduite du véhicule, comme par exemple l'inclinaison de la route.

Ainsi, lorsque le véhicule gravit une côte, la consommation dépasse généralement le seuil arbitraire choisi, alors que le conducteur ne peut pas modifier sa manière de conduire pour consommer moins.

On connaît également un procédé d'aide à la conduite selon lequel une indication de sur-consommation est déterminée grâce à un modèle théorique et affichée afin d'encourager le conducteur à réduire cette sur-consommation. Une vitesse recommandée est en outre affichée.

Ce type de procédé est compliqué à mettre en oeuvre et ne donne pas au conducteur d'information l'aidant à savoir comment modifier sa manière de conduire pour économiser l'énergie, c'est-à-dire sur quel aspects de sa conduite agir pour économiser de l'énergie.

OBJET DE L'INVENTION

Afin de remédier aux inconvénients précités de l'état de la technique, la présente invention propose un procédé permettant de renseigner le conducteur sur le caractère économique de sa manière de conduire et de lui indiquer comment modifier sa manière de conduire pour réduire sa consommation énergétique.

Plus particulièrement, on propose selon l'invention un procédé d'aide à une conduite économique tel que défini par la revendication 1. Le signal représentatif de la manière de conduire du conducteur est directement lié à l'accélération du véhicule et donc facilement interprétable par le conducteur, qui peut agir de manière simple et intuitive en relâchant l'accélérateur pour réduire cette accélération lorsqu'elle est supérieure à la valeur seuil d'accélération.

Ce signal est en outre simple à déterminer.

La valeur seuil d'accélération dépendant de la vitesse du véhicule, il est ainsi possible de prendre en compte des contraintes liées au suivi du trafic et au respect du code de la route, par exemple la vitesse maximale autorisée. Ceci permet de donner au conducteur une indication lui permettant de réduire sa consommation d'énergie de manière réalisable et pratique.

Finalement, l'indication affichée permet au conducteur de modifier sa manière de conduire du point de vue des accélérations, ce qui a un effet sur la consommation énergétique du véhicule.

Selon d'autres caractéristiques avantageuses et non limitatives du procédé selon l'invention :

- à l'étape b), on compare une donnée déduite du signal représentatif de la manière de conduire du conducteur et une donnée déduite de la valeur seuil d'accélération et on détermine l'information affichée en fonction du résultat de cette comparaison ;
- à l'étape b), on affiche une donnée déduite du signal représentatif de la manière de conduire du conducteur et une donnée déduite de la valeur seuil d'accélération de manière à ce que le conducteur puisse les comparer ;

- à l'étape b), on affiche le signal représentatif de la manière de conduire du conducteur mis à l'échelle par rapport à la valeur seuil d'accélération et un indicateur fixe repérant la valeur seuil d'accélération, de manière à ce que le conducteur puisse les comparer ;
- à l'étape b), on affiche une information indiquant que la conduite du conducteur est économique lorsque ledit signal est inférieur à ladite valeur seuil d'accélération ;

- à l'étape b), on affiche une information représentative de l'écart entre ledit signal et ladite valeur seuil d'accélération ;
- à l'étape a), le signal représentatif de la manière de conduire du conducteur est déterminé en fonction de la vitesse du véhicule ;
- à l'étape a), le signal représentatif de la manière de conduire du conducteur est déterminé en fonction de l'enfoncement de la pédale d'accélération ;
- à l'étape a), le signal représentatif de la manière de conduire du conducteur est déterminé en fonction du couple moteur ;
- à l'étape a), la valeur seuil d'accélération est déterminée en fonction d'un paramètre lié aux conditions environnementales dans lesquelles le véhicule évolue ;
- à l'étape a), la valeur seuil d'accélération est déterminée en fonction des spécificités techniques du véhicule concernant sa capacité d'accélération et sa consommation énergétique ;
- à l'étape a), la valeur seuil d'accélération prédéterminée décroit lorsque la vitesse du véhicule augmente ;
- à l'étape a), la valeur seuil d'accélération prédéterminée est nulle lorsque la vitesse du véhicule est supérieure ou égale à une vitesse maximale autorisée ;
- à l'étape a), la valeur seuil d'accélération prédéterminée est déterminée en fonction de la pente de la route sur laquelle le véhicule roule et/ou en fonction de la température du moteur ;
- le procédé comporte également les étapes suivantes :

  e) on détermine un rapport optimal de boîte de vitesses en fonction d'au moins un paramètre de fonctionnement du moteur,
  f) on affiche une indication de ce rapport optimal de boîte de vitesse à engager ;

- avantageusement, ledit paramètre de fonctionnement du moteur dépend d'au moins l'un des paramètres suivants : le couple maximal du moteur et/ou la consommation énergétique du moteur et/ou les caractéristiques de la boîte de vitesses ;
- le procédé comporte en outre l'étape suivante :

  g) on affiche une indication de freinage économique ;

- à l'étape g), l'indication de freinage économique est activée, sur terrain plat ou en montée, lorsque ni la pédale d'accélération ni la pédale de frein du véhicule ne sont enfoncées ;
- à l'étape g), l'indication de freinage économique est activée, en descente, lorsque la pédale d'accélération n'est pas enfoncée et que la décélération du véhicule est inférieure à un seuil prédéterminé ;
- le procédé comporte en outre les étapes suivantes :

  h) on détermine au moins une première note quantifiant le caractère économique en énergie de la conduite du conducteur en fonction d'une distance parcourue pour laquelle le signal déterminé à l'étape a) est inférieur à la valeur seuil d'accélération,
  i) on affiche cette première note ;

- le procédé comporte en outre l'étape suivante :

  j) on détermine une deuxième note quantifiant le caractère économique en énergie de la conduite du conducteur déterminée en fonction d'une distance parcourue pour laquelle le rapport de boîte de vitesses engagé est celui affiché à l'étape f) ;

- le procédé comporte en outre l'étape suivante :

  k) on détermine une troisième note quantifiant le caractère économique en énergie de la conduite du conducteur déterminée en fonction d'une distance parcourue pour laquelle l'indication de freinage économique est activée ;

- le procédé comporte les étapes suivantes :

  l) on détermine une note globale en fonction des première, deuxième et troisième notes déterminées aux étapes h), j) et k),
  m) on affiche cette note globale.

L'invention concerne également un dispositif d'aide à une conduite économique en énergie d'un véhicule automobile, comportant un récepteur adapté à recevoir les signaux provenant d'au moins un capteur embarqué sur le véhicule, une unité de commande informatique programmée pour mettre en oeuvre le procédé d'aide à la conduite tel que décrit précédemment sur la base des signaux reçus par ledit récepteur et des moyens d'affichage des informations déterminées par ce procédé.

Un tel dispositif peut avantageusement faire partie intégrante du véhicule automobile ou se présenter sous la forme d'un dispositif indépendant adapté à être installé dans ce véhicule.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une représentation schématique d'un mode de réalisation possible pour l'affichage de l'information indiquant au conducteur si sa manière de conduire est économique, déterminée selon le procédé conforme à l'invention,
- la figure 2 est une représentation graphique schématique d'un signal corrigé S_corr représentatif de la manière de conduire du conducteur en fonction d'un signal Acc dépendant de l'accélération du véhicule, le signal S_corr correspondant au signal Acc mis à l'échelle sur une échelle de 0 à 100, en prenant en compte une valeur seuil d'accélération Acc_Seuil fixée égale à 80 et d'une valeur maximale d'accélération Acc_Max fixée égale à 100,
- la figure 3 est une représentation graphique schématique de la variation de la valeur seuil d'accélération en fonction de la vitesse du véhicule,
- la figure 4 représente schématiquement l'affichage des différentes informations données au conducteur grâce au procédé selon l'invention.

Selon l'invention, un véhicule automobile est équipé d'un dispositif d'aide à une conduite économique adapté à mettre en oeuvre un procédé d'aide à une conduite économique en énergie, notamment en carburant et/ou en électricité, conforme à l'invention.

Ledit dispositif comporte au moins :

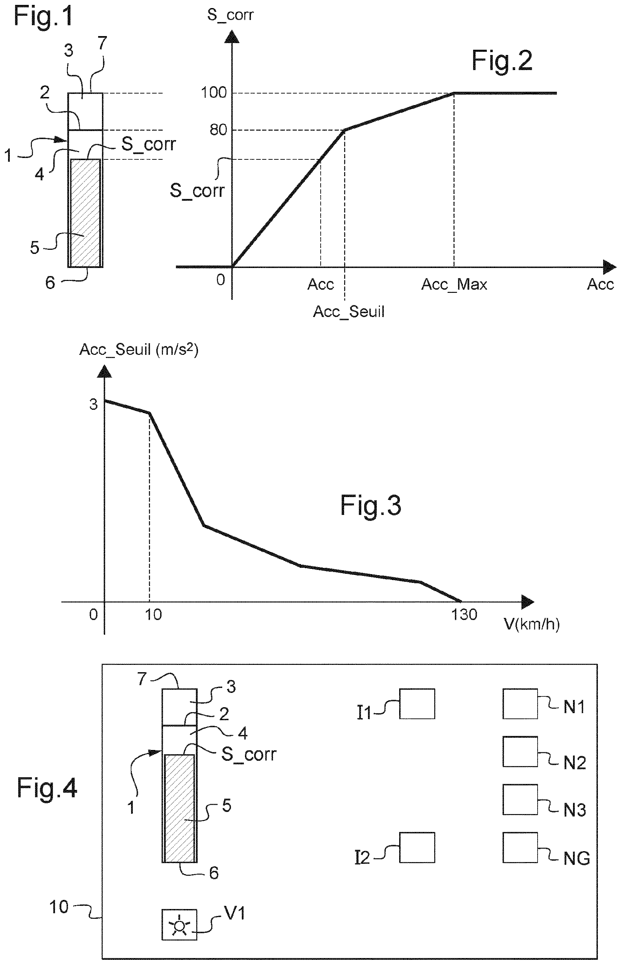

- un récepteur adapté à recevoir les signaux provenant d'au moins un capteur embarqué sur le véhicule,
- une unité de commande informatique programmée pour mettre en oeuvre le procédé d'aide à la conduite conforme à l'invention sur la base des signaux reçus par ledit récepteur et
- des moyens d'affichage des grandeurs déterminées par ce procédé sur un écran 10, représenté schématiquement sur la figure 4.

Ledit capteur peut être, comme détaillé ultérieurement, un capteur d'accélération, de vitesse, de position du véhicule, de pression sur la pédale d'accélération, de pression sur la pédale de frein, de mesure de la température du moteur, du couple moteur, du régime du moteur, de l'état allumé ou éteint du moteur, ou de l'état de fonctionnement du moteur.

Ledit dispositif peut faire partie intégrante du véhicule, l'écran 10 étant alors intégré au tableau de bord. Il peut également être disposé dans un boiter indépendant du véhicule et comportant ou non des moyens de connexion avec ce véhicule permettant notamment d'établir une connexion entre le récepteur du dispositif et les capteurs du véhicule.

Selon le procédé conforme à l'invention, dans une étape a), l'unité de commande détermine un signal S représentatif de la manière de conduire du conducteur du véhicule, en fonction au moins de l'accélération du véhicule, et une valeur seuil d'accélération Acc_Seuil, en fonction au moins de la vitesse du véhicule.

Dans une étape b), l'unité de commande affiche sur l'écran une information indiquant au conducteur du véhicule si sa conduite est économique en énergie en fonction du signal S et de la valeur seuil d'accélération Acc_Seuil déterminés à l'étape a).

Etape a)

*Détermination du signal S représentatif de la manière de conduire du conducteur*

Le signal S représentatif de la manière de conduire est un signal dépendant de l'accélération. Il peut par exemple selon une première variante être égal à l'accélération Acc du véhicule à l'instant t. On a alors S= S1 (t)= Acc(t).

Cette accélération peut par exemple être mesurée directement par un accéléromètre embarqué sur le véhicule, qui transmet cette mesure au récepteur dudit dispositif. Le récepteur communique cette information à l'unité de commande du dispositif.

L'accélération peut également être estimée par calcul à partir d'autres grandeurs mesurées par des capteurs du véhicule, par exemple à partir de la vitesse du véhicule. Elle peut également être estimée à partir des informations transmises par un système de navigation du type GPS (Global Positioning System) du véhicule.

Le signal S représentatif de la manière de conduire du conducteur déterminé à l'étape a) peut également dépendre de :

- la vitesse du véhicule calculée, estimée ou mesurée, et/ou
- l'enfoncement de la pédale d'accélération estimé ou mesuré, et/ou
- le couple moteur estimé ou mesuré.

*Signal S représentatif de la manière de conduire du conducteur mis à l'échelle*

Le signal représentatif de la manière de conduire du conducteur déterminé à l'étape a) peut notamment dépendre de la valeur seuil d'accélération Acc_Seuil par l'intermédiaire d'une mise à l'échelle d'un signal Acc dépendant de l'accélération par rapport à cette valeur seuil d'accélération. On notera ce signal mis à l'échelle S_corr. Selon cette deuxième variante le signal S représentatif de la manière de conduire du conducteur est égal à S_corr.

La valeur seuil d'accélération Acc_Seuil dépendant de la vitesse du véhicule, le signal S_corr dépend alors à la fois de l'accélération et de la vitesse du véhicule.

Le signal Acc dépendant de l'accélération est par exemple égal à l'accélération à l'instant t.

On considère par exemple une échelle allant de 0 à 100.

Un exemple de détermination du signal S_corr mis à l'échelle à partir du signal Acc est représenté de façon schématique sur la figure 2. Dans cet exemple, la valeur du signal S_corr est déterminée sur l'échelle de 0 à 100 en fonction de la valeur du signal Acc dépendant de l'accélération par rapport aux valeurs seuil Acc_Seuil et maximale Acc_Max d'accélération à l'instant t considéré.

Plus précisément, le signal Acc dépendant de l'accélération est mis à l'échelle en fonction d'une valeur minimale de l'accélération, d'une valeur maximale Acc_Max de l'accélération et de la valeur seuil d'accélération Acc_Seuil qui dépendent de la vitesse et peuvent donc varier dans le temps.

La valeur minimale d'accélération est par exemple égale à zéro quelle que soit la vitesse du véhicule.

La valeur maximale d'accélération dépend de la vitesse du véhicule et décroit de préférence lorsque la vitesse augmente. La valeur maximale d'accélération Acc_Max est par définition supérieure ou égale à la valeur seuil d'accélération Acc_Seuil. Elle est déterminée par une étape de calibrage.

La valeur seuil d'accélération Acc_Seuil décroit de préférence lorsque la vitesse augmente, comme expliqué plus en détail ultérieurement.

Comme représenté sur la figure 2, pour la mise à l'échelle du signal Acc dépendant de l'accélération, la valeur maximale d'accélération Acc_Max est fixée égale à une valeur fixe de l'échelle, par exemple 100. La valeur seuil d'accélération Acc_Seuil est également fixée égale à une valeur prédéterminée de l'échelle, par exemple 80.

La mise à l'échelle du signal Acc dépendant de l'accélération est ensuite effectuée sur la base par exemple d'une première évolution linéaire entre la valeur minimale et la valeur seuil d'accélération Acc_Seuil et une deuxième évolution linéaire entre la valeur seuil Acc_Seuil et la valeur maximale d'accélération Acc_Max.

Ce calcul correspond à une première interpolation linéaire de l'accélération entre la valeur minimale et la valeur seuil Acc_Seuil et à une deuxième interpolation linéaire de l'accélération entre la valeur seuil Acc_Seuil et la valeur maximale de l'accélération Acc_Max.

D'autres types d'interpolations peuvent être envisagés.

Comme expliqué ultérieurement, on obtient alors un signal S_corr dont l'affichage à l'étape b) est particulièrement aisé puisqu'il peut être comparé à un indicateur fixe, ici d'une valeur de 80, représentant la valeur seuil d'accélération Acc_Seuil.

*Prise en compte de la vitesse du véhicule*

La vitesse du véhicule peut également être prise en compte directement dans la détermination du signal S représentatif de la manière de conduire du conducteur à l'étape a).

Un exemple de cette prise en compte est présentée ici comme une correction du signal S_corr mis à l'échelle tel que décrit précédemment.

L'unité de commande détermine à cet effet un facteur de vitesse Kvit en fonction de la vitesse mesurée ou estimée du véhicule.

Ce facteur Kvit est par exemple égal à 100 si la vitesse mesurée est supérieure à une valeur maximale prédéterminée, et égal à zéro si la vitesse est inférieure à cette valeur maximale. La vitesse maximale prédéterminée est par exemple égale à 120 kilomètres par heure.

Cette vitesse maximale prédéterminée peut être adaptée aux conditions locales de conduite et notamment aux limitations réglementaires de vitesses. Par exemple, sur une route limitée à 80 kilomètres par heure la vitesse maximale prédéterminée peut être prise égale à 80 kilomètres par heure, et sur une voie rapide limitée à 110 kilomètres par heure elle peut être fixée à 100 kilomètres par heure. La valeur limite réglementaire de la vitesse à l'endroit où circule le véhicule est par exemple obtenue grâce aux informations d'un système de navigation embarqué dans le véhicule.

L'unité de commande détermine ensuite un signal corrigé dépendant de la vitesse du véhicule S_corr_vit selon la formule :

$$S\_corr\_vit = (1 - (1 - S\_corr/100) * (1 - Kvit/100)) * 100,$$

où S_corr est le signal représentatif de la manière de conduire du conducteur mis à l'échelle comme expliqué précédemment.

Selon cette troisième variante le signal S représentatif de la manière de conduire du conducteur est égal à S_corr_vit.

Le signal corrigé dépendant de la vitesse S_corr_vit est ainsi égal à 100, donc supérieur à la valeur seuil d'accélération Acc_Seuil, dès que le facteur de vitesse Kvit est égal à 100, c'est-à-dire dès que la vitesse est supérieure à la valeur maximale prédéterminée. Dans ces conditions, comme expliqué en référence à l'étape b), une information indiquant au conducteur que sa conduite n'est pas économique en énergie est affichée dès que la vitesse du véhicule dépasse la vitesse maximale prédéterminée. Cela permet d'inciter le conducteur à limiter sa vitesse.

Selon une quatrième variante, la vitesse peut être prise en compte dans le signal S représentatif de la manière de conduire du conducteur non mis à l'échelle, par exemple dans le signal S1(t). A cet effet, le signal S représentatif de la manière de conduire du conducteur peut par exemple être diminué d'une quantité dépendant de l'écart entre la vitesse réelle du véhicule et la vitesse maximale prédéterminée définie précédemment, de sorte que le signal S représentatif de la manière de conduire du conducteur prenne la valeur Acc_seuil lorsque la vitesse réelle du véhicule est égale à ladite vitesse maximale prédéterminée.

*Détermination de la valeur seuil d'accélération* Acc_Seuil

Cette valeur seuil d'accélération est prédéterminée en fonction au moins de la vitesse V du véhicule, grâce à des essais successifs. Elle est mise en mémoire dans l'unité de commande, par exemple sous la forme de tableaux ou d'une cartographie de valeurs.

Il s'agit d'une valeur seuil au-dessus de laquelle l'accélération du véhicule n'est pas considérée comme économique en énergie.

Comme le montre la figure 3, cette valeur seuil Acc_Seuil diminue de préférence lorsque la vitesse V du véhicule augmente et est nulle lorsque la vitesse du véhicule est supérieure ou égale à une vitesse maximale autorisée.

Sur l'exemple de la figure 3, cette vitesse maximale autorisée est égale à 130 kilomètres par heure.

Cette vitesse maximale autorisée peut par exemple être choisie en fonction des caractéristiques techniques du véhicule. Il s'agit d'une vitesse au-dessus de laquelle la conduite du véhicule n'est jamais considérée comme économique en énergie. Elle peut également prendre en compte la réglementation en vigueur.

Le conducteur est ainsi encouragé à ne pas dépasser cette vitesse maximale car le signal S représentatif de la manière de conduire du conducteur devient automatiquement supérieur au seuil d'accélération Acc_Seuil lorsque la vitesse du véhicule dépasse cette vitesse maximale. Comme cela sera expliqué ultérieurement, l'information donnée au conducteur à l'étape b) lui montre alors que sa conduite n'est pas économique en énergie.

Plus précisément, la valeur seuil d'accélération Acc_Seuil déterminée à l'étape a) représente de préférence un compromis entre les capacités d'accélération du véhicule, ses caractéristiques de consommation énergétique et des contraintes liées à l'agrément de conduite et au suivi du trafic environnant.

Ainsi, la valeur seuil d'accélération Acc_Seuil peut avantageusement dépendre des spécificités techniques du véhicule concernant sa capacité d'accélération et sa consommation énergétique. Il est alors possible de favoriser des accélérations pour lesquelles le rendement du groupe moto-propulseur du véhicule est optimal en encourageant le conducteur à utiliser ces accélérations par l'indication que sa conduite est alors économique en énergie.

En outre, la valeur seuil d'accélération Acc_Seuil peut dépendre d'un paramètre lié aux conditions environnementales dans lesquelles le véhicule évolue. Ce paramètre est par exemple lié au type de route sur laquelle circule le véhicule : autoroute ou petite rue en ville par exemple. Cette information peut être déterminée par les signaux GPS du véhicule.

La valeur seuil d'accélération Acc_Seuil peut également tenir compte du profil de la route. Par exemple, il est possible de corriger la valeur seuil d'accélération Acc_Seuil déterminée en fonction de la vitesse du véhicule lorsque le véhicule se trouve sur une pente ascendante, en diminuant cette valeur seuil d'accélération. Ceci a pour effet d'encourager le conducteur à limiter encore plus son accélération dans une pente ascendante, car le seuil au-delà duquel l'information affichée à l'étape b) lui indique que sa conduite est peu économique est réduit.

La valeur seuil d'accélération Acc_Seuil peut également être déterminée en fonction de l'enfoncement de la pédale d'accélération. Dans ce cas, cette valeur seuil d'accélération est de préférence corrigée dans les pentes ascendantes pour éviter que le dispositif n'indique systématiquement au conducteur que sa conduite est peu économique lorsqu'il roule dans ces conditions.

En effet, dans une pente ascendante, le conducteur est obligé d'appuyer sur la pédale d'accélération pour gravir la côte. La conduite du conducteur ne se révèle peu économique que s'il appuie plus que nécessaire sur la pédale d'accélération, c'est-à-dire si sa vitesse est supérieure à une vitesse seuil ou si son accélération est supérieure à la valeur seuil d'accélération Acc_Seuil qui peut prendre en compte le profil de la route.

Selon un mode de réalisation préférée de l'invention, la valeur seuil d'accélération Acc_Seuil ne prend pas en compte l'enfoncement de la pédale d'accélération.

La valeur seuil d'accélération Acc_Seuil peut également dépendre de la température du moteur de manière à limiter les accélérations du moteur lorsque la température du moteur est inférieure à une valeur seuil prédéterminée. Cela permet de préconiser une limitation supplémentaire de l'accélération tant que le moteur est froid de façon à limiter les sur-consommations associées à cet état.

A cet effet, la valeur seuil d'accélération Acc_Seuil est par exemple réduite d'un facteur prédéfini lorsque la température du moteur est inférieure à un seuil de température prédéterminé par des essais.

Etape b)

A l'étape b), le dispositif affiche une information indiquant au conducteur du véhicule si sa conduite est économique en énergie en fonction du signal S et de la valeur seuil d'accélération Acc_Seuil déterminés à l'étape a).

De manière générale, lorsque le signal S est inférieur à la valeur seuil d'accélération Acc_Seuil, la manière de conduire du conducteur est évaluée comme économique. A l'inverse, lorsque le signal S est supérieur à la valeur seuil d'accélération Acc_Seuil, la manière de conduire du conducteur est évaluée comme peu économique.

En pratique, le dispositif indique donc au conducteur que sa manière de conduire est économique lorsque le signal S est inférieur à la valeur seuil et/ou qu'elle n'est pas économique lorsque le signal S est supérieur à la valeur seuil.

De préférence, à l'étape b), l'unité de commande affiche une information représentative de l'écart entre ledit signal S et ladite valeur seuil d'accélération Acc_Seuil.

Différents modes de réalisation peuvent être envisagés pour l'étape b).

*Premier mode de réalisation*

Selon un premier mode de réalisation, à l'étape b), l'unité de commande compare une donnée déduite du signal S représentatif de la manière de conduire du conducteur et une donnée déduite de la valeur seuil d'accélération Acc_Seuil et affiche sur l'écran une information en fonction du résultat de cette comparaison.

Cette comparaison peut par exemple être réalisée par un calcul de différence entre la valeur seuil d'accélération et le signal S déterminés à l'étape a).

On peut par exemple envisager qu'à l'étape b), un voyant est allumé lorsque la conduite est évaluée comme économique, c'est-à-dire dans le cas où le signal S est inférieur à la valeur seuil d'accélération Acc_Seuil pour informer le conducteur. Au contraire, on peut aussi envisager qu'un voyant est allumé lorsque la conduite est évaluée comme peu économique c'est-à-dire dans le cas où le signal S est supérieur à la valeur seuil d'accélération Acc_Seuil.

*Deuxième mode de réalisation*

Selon un deuxième mode de réalisation, à l'étape b), l'unité de commande affiche une donnée déduite du signal S, représentatif de la manière de conduire du conducteur et une donnée déduite de la valeur seuil d'accélération Acc_Seuil de manière à ce que le conducteur puisse les comparer.

L'unité centrale affiche par exemple directement sur l'écran la valeur du signal S déterminée en fonction de l'accélération à l'instant t et de la valeur seuil d'accélération déterminée en fonction de la vitesse du véhicule à l'instant t. Cet affichage peut se faire sous la forme de différents graphes. On peut par exemple envisager de représenter les deux signaux par deux barres côte à côte.

Le conducteur peut alors visuellement comparer les deux barres pour savoir si sa conduite est économique. En outre, il peut visualiser l'écart entre les deux signaux et évaluer si le signal S représentatif de sa manière de conduire est proche de la valeur seuil d'accélération ou au contraire très éloigné.

*Troisième mode de réalisation*

Selon un troisième mode de réalisation, qui est le mode de réalisation préféré, l'unité de commande affiche d'une part le signal S_corr représentatif de la manière de conduire du conducteur mis à l'échelle par rapport à la valeur seuil d'accélération Acc_Seuil comme expliqué précédemment, et d'autre part, un indicateur fixe repérant la valeur seuil d'accélération, de manière à ce que le conducteur puisse les comparer.

Ce mode de réalisation est plus particulièrement illustré par les figures 1 et 4. On a représenté sur ces figures l'affichage par le dispositif selon l'invention d'une barre lumineuse 5 dont la hauteur représente la valeur du signal S_corr mis à l'échelle déterminé à l'étape a).

Cette barre lumineuse 5 est affichée dans un cadre 1 qui comporte un indicateur fixe 2 représentant la valeur seuil d'accélération Acc_Seuil.

La barre lumineuse 5 est ici verticale et les bords supérieur 7 et inférieur 6 du cadre 1 représentent respectivement la valeur maximale et la valeur minimale d'accélération qui sont prédéterminées.

Les indicateurs représentant la valeur nulle et la valeur maximale Acc_Max de l'accélération présentent donc également une position fixe dans le cadre d'affichage 1, puisqu'ils sont ici matérialisés respectivement par le bord inférieur 6 et le bord supérieur 7 du cadre 1.

L'indicateur fixe 2 divise le cadre 1 en une zone inférieure 4 et une zone supérieure 3. Lorsque l'extrémité supérieure de la barre 5 est située dans la zone inférieure 4 du cadre 1, le conducteur est informé que sa manière de conduire est économique en énergie, et lorsque l'extrémité supérieure de la barre 5 est située dans la zone supérieure 3 du cadre 1, le conducteur est informé que sa manière de conduire est peu économique en énergie.

Le signal S_corr déterminé à l'étape a) par mise à l'échelle d'un signal dépendant de l'accélération peut ainsi être affiché de manière précise par rapport à ces indicateurs fixes, ce qui permet à l'utilisateur de comparer le signal S_corr et la valeur seuil d'accélération de manière rapide et pratique.

Le signal S_corr est de préférence déterminé à chaque instant t et affiché en temps réel sur l'écran. Ce signal S_corr peut présenter des variations rapides. Il est avantageusement prévu de lisser ce signal S_corr en limitant l'amplitude des variations du signal entre deux instants t pour lesquels il est calculé.

La barre 5 affichée représentant le signal déterminé à l'étape a) présente avantageusement un code couleur facilement compréhensible par le conducteur. Elle est par exemple verte lorsque le signal S_corr est inférieur à la valeur seuil d'accélération Acc_Seuil et rouge lorsque le signal est supérieur à cette valeur seuil. De cette façon, le conducteur sait immédiatement si sa conduite est économique (barre verte) ou si elle ne l'est pas (barre rouge).

L'indicateur fixe 2 repérant la valeur seuil d'accélération est de préférence lumineux afin d'être facilement visualisé par le conducteur.

En outre, l'unité de commande affiche ici également une information représentative de l'écart entre ledit signal et ladite valeur seuil d'accélération.

Le conducteur visualise en effet immédiatement l'écart entre l'extrémité supérieure de la barre 5 et l'indicateur fixe 2 lumineux indiquant la valeur seuil d'accélération Acc_Seuil. Cette visualisation est d'autant plus aisée que l'indicateur 2 de la valeur seuil d'accélération présente une position fixe et que seule l'extrémité supérieure de la barre 5 présente un niveau variable.

Le conducteur voit donc facilement s'il se trouve loin du seuil ou proche de celui-ci et peut adapter sa manière de conduire en conséquence.

Avantageusement, ici, le dispositif selon l'invention détermine et affiche d'autres informations pour aider le conducteur à avoir une manière de conduire économique en énergie.

Etapes e) et f)

Par exemple, l'unité de commande peut également être programmée pour déterminer, dans une étape e), un rapport optimal de boîte de vitesses en fonction d'au moins un paramètre de fonctionnement du moteur et pour afficher, dans une étape f), une indication de ce rapport optimal de boîte de vitesses à engager sur l'écran 10 du dispositif.

Cette indication de rapport de boîte de vitesses est de préférence affichée à proximité du cadre 1 décrit précédemment, par exemple dans un cadre l1 tel que représenté sur la figure 4.

Les étapes e) et f) sont plus particulièrement réalisées dans le cas d'un véhicule automobile à boîte de vitesses manuelle.

Le paramètre de fonctionnement du moteur en fonction duquel le rapport optimal de boîte de vitesse est déterminé comporte par exemple le couple maximal du moteur et/ou la consommation énergétique du moteur et/ou les caractéristiques de la boîte de vitesses, telles que le nombre de rapports disponibles et les couples moteur correspondant à chaque vitesse.

Le rapport optimal de boîte de vitesses est prédéterminé en fonction des paramètres précités par des calculs, voire par des essais préalables afin de limiter la consommation d'énergie du véhicule.

Il est mis en mémoire dans l'unité de commande du dispositif par exemple sous forme de tableaux ou de cartographies.

A l'étape e), l'unité de commande recherche ainsi le rapport optimal correspondant aux paramètres de fonctionnement du moteur dont la valeur est mesurée par des capteurs ou estimée.

Grâce à l'indicateur affiché à l'étape f), le conducteur sait à tout instant quel rapport il devrait passer afin d'avoir une conduite économique en énergie.

Etape g)

L'unité de commande peut également être programmée pour afficher, dans une étape g), une indication de freinage économique.

Cette indication de freinage économique correspond par exemple à l'allumage d'un voyant situé sur l'écran, de préférence à proximité du cadre 1 décrit précédemment. Ce voyant est représenté par la référence V1 sur la figure 4.

L'allumage de ce voyant, et donc l'affichage de cette indication de freinage économique peut être mis dans un état spécifique si le véhicule se trouve dans un état de roue libre dans lequel le moteur n'agit pas sur les roues. Cet état de roue libre du véhicule est détecté par l'unité de commande en fonction d'informations sur la position de l'embrayage, le contact de la position neutre de la boîte de vitesse et la valeur du régime du moteur, reçues de la part de différents capteurs du moteur par le récepteur du dispositif.

Le récepteur du dispositif reçoit également par exemple des informations de capteurs situés dans les pédales d'accélération et de frein indiquant si une pression est exercée sur elles par le conducteur.

L'allumage de ce voyant est activé, lorsque le véhicule roule sur terrain plat ou en montée, lorsque ni la pédale d'accélération ni la pédale de frein du véhicule ne sont enfoncées.

Le véhicule est alors en freinage moteur, ce qui constitue la manière la plus économique de freiner.

L'allumage de ce voyant est activé, lorsque le véhicule roule en descente, lorsque la pédale d'accélération n'est pas enfoncée et que la décélération du véhicule est inférieure à un seuil prédéterminé.

Il peut en effet arriver qu'en descente, le conducteur soit obligé d'appuyer sur la pédale de frein. On considère cependant que si la décélération du véhicule est inférieure à un seuil faible, par exemple inférieure à 0,2 mètre par seconde carré, le conducteur utilise son frein de manière économique et que l'indication doit être affichée.

L'allumage de ce voyant indique au conducteur qu'il freine de manière économique.

En outre, on impose que le signal déterminé à l'étape a) soit nul lorsque l'indicateur de freinage économique est activé, ce qui renforce l'indication de conduite économique donnée au conducteur.

On peut prévoir en outre une temporisation pour éviter un allumage passager du voyant V1 indiquant le freinage économique à chaque changement de vitesse, ce qui n'est pas lié à une manière de conduire économique.

Etape de calcul et affichage de la consommation

Enfin, on peut prévoir également l'affichage de la consommation du véhicule pour compléter l'information donnée au conducteur.

La consommation du véhicule est par exemple moyennée sur un temps très court. Elle est fixée à zéro lorsque l'indicateur de freinage économique est activé, de manière à inciter le conducteur à freiner économiquement.

Elle est affichée dans un cadre l2 représenté sur la figure 4 et situé à proximité du cadre 1 décrit précédemment.

En parallèle de ces informations, le dispositif selon l'invention affiche également de préférence une ou plusieurs notes quantifiant le caractère économique de la manière de conduire du conducteur suivant différents critères. Pour chaque note, plus celle-ci est élevée, plus la manière de conduire du conducteur est économique.

Les notes sont par exemple comprises entre 0 et 100.

Chacune de ces notes peut être calculée en temps réel, ou seulement à la fin d'un parcours donné. Dans le premier cas, on prend par exemple en compte la distance parcourue depuis la dernière mise en route du moteur. Dans le second cas, on prend en compte la distance parcourue entre deux arrêts successifs du moteur.

En conséquence, chaque note peut être affichée en temps réel ou à l'arrêt du moteur du véhicule.

Etapes h) et i)

L'unité de commande détermine de préférence, dans une étape h), au moins une première note quantifiant le caractère économique en énergie de la conduite du conducteur du point de vue des accélérations et affiche cette première note sur l'écran dans une étape i). Elle est ici affichée dans un cadre N1 représentée sur la figure 4.

Cette première note est calculée en fonction d'une distance parcourue D_AccEco pour laquelle la conduite du véhicule est évaluée comme économique en énergie.

L'unité de commande détermine, pour le calcul de cette première note, la distance parcourue pour laquelle le signal S déterminé à l'étape a) est inférieur à la valeur seuil d'accélération Acc_Seuil qui peut être identifiée à la distance D_AccEco ainsi que la distance D_Acc totale parcourue en accélération.

Il est possible de déterminer la distance D_AccEco en prenant en compte une marge de tolérance. On détermine alors la distance parcourue pour laquelle le signal déterminé à l'étape a) est inférieur à la valeur seuil d'accélération à une marge près donnée. Cette marge peut être exprimée comme un pourcentage de la valeur seuil d'accélération. Par exemple, la distance D_AccEco est déterminée comme la distance parcourue pour laquelle la valeur d'accélération est inférieure à la valeur seuil d'accélération à 10 pourcent près, c'est-à-dire inférieure à 110 pourcent de la valeur seuil d'accélération.

Plus précisément, la première note est par exemple déterminée de sorte qu'elle est maximum lorsque la distance D_AccEco est égale à la distance D_Acc totale parcourue en accélération. Elle est nulle si la distance parcourue D_AccEco est inférieure à une valeur seuil prédéfinie égale à une fraction K1 de la distance D_Acc totale parcourue en accélération.

Ceci présente l'avantage de répartir l'ensemble des notes possibles sur un large domaine. Il est en effet peu courant que le conducteur impose toujours une accélération supérieure à la valeur seuil d'accélération.

Le choix de la fraction K1 de la distance D_Acc totale parcourue en accélération en deça de laquelle la première note est nulle est réalisé à partir d'essais préalables.

La fraction K1 est inférieure à 1.

Cette première note est par exemple calculée selon la formule suivante :

$$Note1 = ( \max ( 0, \min(1, (D\_AccEco - K1*D\_Acc)/((1-K1)*D\_Acc) )) )*100$$

où « max » et « min » représentent les fonctions maximum et minimum.

Etape j)

L'unité de commande détermine également, dans une étape j), une deuxième note quantifiant le caractère économique en énergie de la conduite du conducteur du point de vue des rapports de boîte de vitesses engagés. Cette deuxième note est affichée sur l'écran du dispositif, dans un cadre N2 représenté sur la figure 4.

Cette deuxième note est calculée en fonction d'une distance parcourue pour laquelle le rapport de boîte de vitesses engagé est celui affiché à l'étape f).

L'unité de commande détermine pour le calcul de cette deuxième note la distance D_RapEco parcourue pour laquelle le rapport de boite de vitesses engagé est celui indiqué par l'indicateur de rapport de boîte de vitesses optimal et la distance D_tot totale parcourue.

Plus précisément, la deuxième note est par exemple déterminée de sorte qu'elle est maximum lorsque la distance D_RapEco est égale à la distance D_tot totale. Elle est nulle si la distance parcourue D_RapEco est inférieure à une valeur définie comme une fraction K2 de la distance D_tot totale.

Ceci présente l'avantage de répartir l'ensemble des notes possibles sur un large domaine. Il est en effet peu courant que le conducteur impose toujours un rapport de boîte de vitesses différent de celui recommandé.

Le choix de la fraction K2 de la distance D_tot totale en deça de laquelle la deuxième note est nulle est réalisé à partir d'essais préalables.

La fraction K2 est inférieure à 1.

Cette deuxième note est par exemple calculée selon la formule suivante :

$$Note2 = ( \max ( 0, \min(1, (D\_RapEco - K2*D\_tot)/((1-K2)*D\_tot) )) )*100..$$

Etape k)

L'unité de commande détermine également, dans une étape k), une troisième note quantifiant le caractère économique en énergie de la conduite du conducteur du point de vue du freinage. Cette troisième note est affichée sur l'écran du dispositif dans un cadre N3 représenté sur la figure 4.

Cette troisième note est calculée en fonction d'une distance parcourue pour laquelle l'indication de freinage économique est activée.

L'unité de commande détermine pour le calcul de cette note la distance D_FrEco parcourue pour laquelle l'indication de freinage économique est activée et la distance D_Fr totale parcourue en décélération.

Plus précisément, la troisième note est par exemple déterminée de sorte qu'elle est maximum lorsque la distance D_FrEco est égale à la distance D_Fr totale parcourue en décélération. Elle est nulle si la distance parcourue D_FrEco est inférieure à une valeur définie comme une fraction K3 de la distance D_Fr totale parcourue en décélération.

Ceci présente l'avantage de répartir l'ensemble des notes possibles sur un large domaine. Il est en effet peu courant que le conducteur n'utilise jamais le frein moteur.

Le choix de la fraction K3 de la distance D_Fr en deça de laquelle la troisième note est nulle est réalisé à partir d'essais préalables.

La fraction K3 est inférieure à 1.

Cette troisième note est par exemple calculée selon la formule suivante :

$$\text{Note3} = ( \max ( 0, \min(1, (D\_FrEco - K3*D\_Fr)/((1-K3)*D\_Fr) )) )*100.$$

Etape l)

Enfin, l'unité de commande détermine de préférence, dans une étape l), une note globale en fonction des première, deuxième et troisième notes déterminées aux étapes h), j) et k), et affiche cette note globale dans une étape m). Elle est ici affichée dans un cadre NG représenté sur la figure 4.

Cette note globale est par exemple calculée comme une moyenne pondérée des première, deuxième et troisième notes.

Cette note globale permet au conducteur d'avoir une évaluation globale du caractère économique de sa conduite. Les première, deuxième et troisième notes lui indiquent dans quels domaines sa conduite est la plus économique, ce qui correspond aux notes les plus élevées et dans quels domaines elle l'est moins, ce qui correspond aux notes les plus basses. Le conducteur sait ainsi comment modifier sa manière de conduire pour rendre sa conduite économique.

## Revendications

1. Procédé d'aide à une conduite économique en énergie d'un véhicule automobile, comportant les étapes suivantes :

   a) on détermine un signal (S) représentatif de la manière de conduire du conducteur du véhicule, en fonction au moins de l'accélération du véhicule, et une valeur seuil d'accélération (Acc_Seuil), en fonction au moins de la vitesse du véhicule,
   b) on affiche une information indiquant au conducteur du véhicule si sa conduite est économique en énergie en fonction du signal (S) et de la valeur seuil d'accélération (Acc_Seuil) déterminés à l'étape a),

   **caractérisé en ce qu'**il comporte également les étapes suivantes :

   e) on détermine un rapport optimal de boîte de vitesses en fonction d'au moins un paramètre de fonctionnement du moteur,
   f) on affiche une indication de ce rapport optimal de boîte de vitesses à engager, et
   j) on détermine une deuxième note quantifiant le caractère économique en énergie de la conduite du conducteur déterminée en fonction d'une distance parcourue pour laquelle le rapport de boîte de vitesses engagé est celui affiché à l'étape f).

2. Procédé selon la revendication 1, selon lequel, à l'étape b), on compare une donnée déduite du signal (S) représentatif de la manière de conduire du conducteur et une donnée déduite de la valeur seuil d'accélération (Acc_Seuil) et on détermine l'information affichée en fonction du résultat de cette comparaison.

3. Procédé selon la revendication 1, selon lequel, à l'étape b), on affiche une donnée déduite du signal (S) représentatif de la manière de conduire du conducteur et une donnée déduite de la valeur seuil d'accélération (Acc_Seuil), de manière à ce que le conducteur puisse les comparer.

4. Procédé selon la revendication 1, selon lequel, à l'étape b), on affiche le signal (S_corr, S_corr_vit) représentatif de la manière de conduire du conducteur mis à l'échelle par rapport à la valeur seuil d'accélération (Acc_Seuil) et un indicateur fixe repérant cette valeur seuil d'accélération (Acc_Seuil), de manière à ce que le conducteur puisse comparer le signal (S_corr, S_corr_vit) et la valeur seuil (Acc_Seuil).

5. Procédé selon l'une quelconque des revendications 1 à 4, selon lequel, à l'étape b), on affiche une information indiquant que la conduite du conducteur est économique lorsque ledit signal (S) est inférieur à ladite valeur seuil d'accélération (Acc_Seuil).

6. Procédé selon l'une quelconque des revendications 1 à 5, selon lequel, à l'étape b), on affiche une information représentative de l'écart entre ledit signal (S) et ladite valeur seuil d'accélération (Acc_Seuil).

7. Procédé selon l'une quelconque des revendications 1 à 6, selon lequel, à l'étape a), le signal (S) représentatif de la manière de conduire du conducteur est déterminé en fonction de la vitesse du véhicule.

8. Procédé selon l'une quelconque des revendications 1 à 7, selon lequel, à l'étape a), le signal représentatif de la manière de conduire du conducteur est déterminé en fonction du couple moteur.

9. Procédé selon l'une quelconque des revendications 1 à 8, selon lequel, à l'étape a), la valeur seuil d'accélération (Acc_Seuil) est déterminée en fonction d'un paramètre lié aux conditions environnementales dans lesquelles le véhicule évolue.

10. Procédé selon l'une quelconque des revendications 1 à 9, selon lequel, à l'étape a), la valeur seuil d'accélération (Acc_Seuil) est déterminée en fonction des spécificités techniques du véhicule concernant sa capacité d'accélération et sa consommation énergétique.

11. Procédé selon l'une quelconque des revendications 1 à 10, selon lequel, à l'étape a), la valeur seuil d'accélération (Acc_Seuil) décroit lorsque la vitesse du véhicule augmente.

12. Procédé selon l'une quelconque des revendications 1 à 11, selon lequel, à l'étape a), la valeur seuil d'accélération (Acc_Seuil) est déterminée en fonction de la pente de la route sur laquelle le véhicule roule et/ou en fonction de la température du moteur.

13. Procédé selon l'une quelconque des revendications 1 à 12, selon lequel ledit paramètre de fonctionnement du moteur dépend d'au moins l'un des paramètres suivants : le couple maximal du moteur et/ou la consommation énergétique du moteur et/ou les caractéristiques de la boîte de vitesses.

14. Procédé selon l'une quelconque des revendications 1 à 13, comportant en outre l'étape suivante :

g) on affiche une indication de freinage économique.

15. Procédé selon la revendication 14, selon lequel, à l'étape g), l'indication de freinage économique est activée, sur terrain plat ou en montée, lorsque ni la pédale d'accélération ni la pédale de frein du véhicule ne sont enfoncées.

16. Procédé selon l'une des revendications 14 ou 15, selon lequel, à l'étape g), l'indication de freinage économique est activée, en descente, lorsque la pédale d'accélération n'est pas enfoncée et que la décélération du véhicule est inférieure à un seuil prédéterminé.

17. Procédé selon l'une quelconque des revendications 1 à 16, comportant en outre les étapes suivantes :

h) on détermine au moins une première note quantifiant le caractère économique en énergie de la conduite du conducteur en fonction d'une distance parcourue pour laquelle le signal déterminée à l'étape a) est inférieur à la valeur seuil l'accélération, et
i) on affiche cette première note.

18. Procédé selon l'une quelconque des revendications précédentes prise dans la dépendance de la revendication 14, comportant en outre l'étape suivante :

k) on détermine une troisième note quantifiant le caractère économique en énergie de la conduite du conducteur déterminée en fonction d'une distance parcourue pour laquelle l'indication de freinage économique est activée.

19. Procédé selon les revendications 17 et 18, comportant les étapes suivantes :

l) on détermine une note globale en fonction des première, deuxième et troisième notes déterminées aux étapes h), j) et k),

m) on affiche cette note globale.

**20.** Dispositif d'aide à une conduite économique en énergie d'un véhicule automobile, comportant un récepteur adapté à recevoir les signaux provenant d'au moins un capteur embarqué sur le véhicule, une unité de commande informatique programmée pour mettre en oeuvre le procédé d'aide à la conduite conforme à l'une quelconque des revendications précédentes sur la base des signaux reçus par ledit récepteur et des moyens d'affichage des informations déterminées par ce procédé.

**Patentansprüche**

**1.** Hilfsverfahren zum energiesparenden Fahren eines Kraftfahrzeugs, das die folgenden Schritte aufweist:

a) es wird ein Signal (S), das für die Fahrweise des Fahrers des Fahrzeugs repräsentativ ist, in Abhängigkeit von mindestens der Beschleunigung des Fahrzeugs und ein Beschleunigungsschwellenwert (Acc_Seuil) in Abhängigkeit von mindestens der Geschwindigkeit des Fahrzeugs bestimmt,
a) es wird eine Information angezeigt, die dem Fahrer des Fahrzeugs angibt, ob sein Fahren in Abhängigkeit von dem Signal (S) und dem Beschleunigungsschwellenwert (Acc_Seuil), die in dem Schritt a) bestimmt werden, energiesparend ist,

**dadurch gekennzeichnet ist, dass** es ebenfalls die folgenden Schritte aufweist:

e) es wird ein optimales Übersetzungsverhältnis des Getriebes in Abhängigkeit von mindestens einem Funktionsparameter des Motors bestimmt,
f) es wird eine Angabe dieses einzulegenden optimalen Übersetzungsverhältnisses des Getriebes angezeigt und
j) es wird eine zweiten Bewertung bestimmt, die den energiesparenden Charakter der Fahrweise des Fahrers quantifiziert, die in Abhängigkeit von einer zurückgelegten Strecke bestimmt wird, für die das eingelegte Übersetzungsverhältnis des Getriebes jenes ist, das in Schritt f) angezeigt wird.

**2.** Verfahren nach Anspruch 1, wobei in dem Schritt b) ein Datum, das von dem Signal (S) abgeleitet wird, das für die Fahrweise des Fahrers des Fahrzeugs repräsentativ ist, und ein Datum, das von dem Beschleunigungsschwellenwert (Acc_Seuil) abgeleitet wird, verglichen wird und es wird die Information bestimmt wird, die in Abhängigkeit von dem Ergebnis dieses Vergleichs angezeigt wird.

**3.** Verfahren nach Anspruch 1, wobei in dem Schritt b) ein Datum, das von dem Signal (S) abgeleitet wird, das für die Fahrweise des Fahrers des Fahrzeugs repräsentativ ist, und ein Datum, das von dem Beschleunigungsschwellenwert (Acc_Seuil) abgeleitet wird, derart angezeigt werden, dass sie der Fahrer vergleichen kann.

**4.** Verfahren nach Anspruch 1, wobei in dem Schritt b) das Signal (S_corr, S_corr_vit), das für die Fahrweise des Fahrers des Fahrzeugs repräsentativ ist, das in Bezug auf den Beschleunigungsschwellenwert (Acc_Seuil) skaliert wird, und ein fester Indikator, der diesen Beschleunigungsschwellenwert (Acc_Seuil) lokalisiert, derart angezeigt werden, dass der Fahrer das Signal (S_corr, S_corr_vit) und den Schwellenwert (Acc_Seuil) vergleichen kann.

**5.** Verfahren nach einem der Ansprüche 1 bis 4, wobei in dem Schritt b) eine Information angezeigt wird, die angibt, dass die Fahrweise des Fahrers energiesparend ist, wenn das Signal (S) geringer als der Beschleunigungsschwellwert (Acc_Seuil) ist.

**6.** Verfahren nach einem der Ansprüche 1 bis 5, wobei in dem Schritt b) eine Information angezeigt wird, die für die Differenz zwischen dem Signal (S) und dem Beschleunigungsschwellwert (Acc_Seuil) repräsentativ ist.

**7.** Verfahren nach einem der Ansprüche 1 bis 6, wobei in dem Schritt a) das Signal (S), das für die Fahrweise des Fahrers repräsentativ ist, in Abhängigkeit von der Geschwindigkeit des Fahrzeugs bestimmt wird.

**8.** Verfahren nach einem der Ansprüche 1 bis 7, wobei in dem Schritt a) das Signal, das für die Fahrweise des Fahrers repräsentativ ist, in Abhängigkeit von dem Motordrehmoment bestimmt wird.

**9.** Verfahren nach einem der Ansprüche 1 bis 8, wobei in dem Schritt a) der Beschleunigungsschwellwert (Acc_Seuil) in Abhängigkeit von einem Parameter bestimmt wird, der mit den Umgebungsbedingungen verbunden ist, in denen sich das Fahrzeug bewegt.

10. Verfahren nach einem der Ansprüche 1 bis 9, wobei in dem Schritt a) der Beschleunigungsschwellwert (Acc_Seuil) in Abhängigkeit von den technischen Eigenschaften in Bezug auf sein Beschleunigungsvermögen und seinen Energieverbrauch bestimmt wird.

11. Verfahren nach einem der Ansprüche 1 bis 10, wobei in dem Schritt a) der Beschleunigungsschwellwert (Acc_Seuil) abnimmt, wenn die Geschwindigkeit des Fahrzeugs steigt.

12. Verfahren nach einem der Ansprüche 1 bis 11, wobei in dem Schritt a) der Beschleunigungsschwellwert (Acc_Seuil) in Abhängigkeit von der Neigung der Straße, auf der das Fahrzeug fährt, und/oder in Abhängigkeit von der Temperatur des Motors bestimmt wird.

13. Verfahren nach einem der Ansprüche 1 bis 12, wobei der Betriebsparameter des Motors von mindestens einem der folgenden Parameter abhängt: dem maximalen Motordrehmoment und/oder dem Energieverbrauch des Motors und/oder den Eigenschaften des Getriebes.

14. Verfahren nach einem der Ansprüche 1 bis 13, ferner umfassend den folgenden Schritt:

f) es wird eine Anzeige einer Bremsung im Sparmodus angezeigt.

15. Verfahren nach Anspruch 14, wobei in dem Schritt g) die Anzeige der Bremsung im Sparmodus auf flachem oder ansteigendem Gelände aktiviert wird, wenn weder das Gaspedal noch das Bremspedal des Fahrzeugs niedergedrückt werden.

16. Verfahren nach einem der Ansprüche 14 oder 15, wobei in dem Schritt g) die Anzeige der Bremsung im Sparmodus beim Bergabfahren aktiviert wird, wenn das Gaspedal nicht niedergedrückt wird und die Verzögerung des Fahrzeugs unter einem vorbestimmten Schwellenwert liegt.

17. Verfahren nach einem der Ansprüche 1 bis 16, ferner umfassend die folgenden Schritte:

h) es wird mindestens eine erste Bewertung bestimmt, die den energiesparenden Charakter der Fahrweise des Fahrers in Abhängigkeit von einer zurückgelegten Strecke quantifiziert, für die das Signal, das in Schritt a) bestimmt wird, niedriger als der Beschleunigungsschwellwert ist, und
i) diese erste Bewertung wird angezeigt.

18. Verfahren nach einem der vorhergehenden Ansprüche, in Abhängigkeit von Anspruch 14 genommen, ferner umfassend den folgenden Schritt:

k) es wird eine dritte Bewertung bestimmt, die den energiesparenden Charakter der Fahrweise des Fahrers quantifiziert, die in Abhängigkeit von einer zurückgelegten Strecke bestimmt wird, für die die Anzeige der Bremsung im Sparmodus aktiviert wird.

19. Verfahren nach einem der Ansprüche 17 und 18, umfassend die folgenden Schritte:

l) es wird eine Gesamtbewertung in Abhängigkeit von der ersten, zweiten und dritten Bewertung bestimmt, die in den Schritten h), j) und k) bestimmt werden,
m) es wird diese Gesamtbewertung angezeigt.

20. Hilfsvorrichtung zum energiesparenden Fahren eines Kraftfahrzeugs, umfassend einen Empfänger, der geeignet ist, die Signale zu empfangen, die von mindestens einem sich im Fahrzeug befindlichen Sensor kommen, eine Computersteuereinheit, die programmiert ist, um das Verfahren zur Unterstützung des Fahrens nach einem der vorhergehenden Ansprüche auf der Grundlage der Signale, die von dem Empfänger empfangen werden, und den Mitteln zum Anzeigen von Informationen, die durch dieses Verfahren bestimmt werden, umzusetzen.

**Claims**

1.  Method for assisting in energy-efficient driving of a motor vehicle, including the following steps:

    a) determining a signal (S) representative of the driving style of the driver of the vehicle, on the basis at least of the acceleration of the vehicle, and an acceleration threshold value (Acc_Seuil), on the basis at least of the speed of the vehicle,
    b) displaying an item of information indicating to the driver of the vehicle whether his driving is energy-efficient on the basis of the signal (S) and of the acceleration threshold value (Acc_Seuil) that are determined in step a),

    **characterized in that** it also includes the following steps:

    e) determining an optimum gear ratio on the basis of at least one operating parameter of the engine,
    f) displaying an indication of this optimum gear ratio to be engaged, and
    j) determining a second grade quantifying the energy-efficient nature of the driving of the driver, which grade is determined on the basis of a covered distance for which the engaged gear ratio is the one displayed in step f).

2.  Method according to Claim 1, wherein, in step b), an item of data derived from the signal (S) representative of the driving style of the driver and an item of data derived from the acceleration threshold value (Acc_Seuil) are compared, and the displayed item of information is determined on the basis of the result of this comparison.

3.  Method according to Claim 1, wherein, in step b), an item of data derived from the signal (S) representative of the driving style of the driver and an item of data derived from the acceleration threshold value (Acc_Seuil) are displayed, such that the driver is able to compare them.

4.  Method according to Claim 1, wherein, in step b), the signal (S_corr, S_corr_vit) representative of the driving style of the driver, scaled with respect to the acceleration threshold value (Acc_Seuil), and a fixed indicator referencing this acceleration threshold value (Acc_Seuil) are displayed, such that the driver is able to compare the signal (S_corr, S_corr_vit) and the threshold value (Acc_Seuil).

5.  Method according to any one of Claims 1 to 4, wherein, in step b), an item of information indicating that the driving of the driver is efficient is displayed when said signal (S) is lower than said acceleration threshold value (Acc_Seuil).

6.  Method according to any one of Claims 1 to 5, wherein, in step b), an item of information representative of the difference between said signal (S) and said acceleration threshold value (Acc_Seuil) is displayed.

7.  Method according to any one of Claims 1 to 6, wherein, in step a), the signal (S) representative of the driving style of the driver is determined on the basis of the speed of the vehicle.

8.  Method according to any one of Claims 1 to 7, wherein, in step a), the signal representative of the driving style of the driver is determined on the basis of the engine torque.

9.  Method according to any one of Claims 1 to 8, wherein, in step a), the acceleration threshold value (Acc_Seuil) is determined on the basis of a parameter linked to the environmental conditions in which the vehicle is travelling.

10. Method according to any one of Claims 1 to 9, wherein, in step a), the acceleration threshold value (Acc_Seuil) is determined on the basis of the specific technical features of the vehicle with regard to its acceleration capability and its energy consumption.

11. Method according to any one of Claims 1 to 10, wherein, in step a), the acceleration threshold value (Acc_Seuil) decreases when the speed of the vehicle increases.

12. Method according to any one of Claims 1 to 11, wherein, in step a), the acceleration threshold value (Acc_Seuil) is determined on the basis of the gradient of the road on which the vehicle is running and/or on the basis of the temperature of the engine.

13. Method according to any one of Claims 1 to 12, wherein said operating parameter of the engine depends on at least one of the following parameters: the maximum torque of the engine and/or the energy consumption of the engine and/or the features of the gearbox.

14. Method according to any one of Claims 1 to 13, furthermore including the following step:

   g) displaying an indication of efficient braking.

15. Method according to Claim 14, wherein, in step g), the efficient braking indication is activated, on flat ground or when going uphill, when neither the acceleration pedal nor the brake pedal of the vehicle are pressed.

16. Method according to either of Claims 14 and 15, wherein, in step g), the efficient braking indication is activated, when going downhill, when the acceleration pedal is not pressed and the deceleration of the vehicle is less than a predetermined threshold.

17. Method according to any one of Claims 1 to 16, furthermore including the following steps:

   h) determining at least one first grade quantifying the energy-efficient nature of the driving of the driver on the basis of a covered distance for which the signal determined in step a) is lower than the acceleration threshold value, and
   i) displaying this first grade.

18. Method according to any one of the preceding claims where dependent on Claim 14, furthermore including the following step:

   k) determining a third grade quantifying the energy-efficient nature of the driving of the driver, which grade is determined on the basis of a covered distance for which the efficient braking indication is activated.

19. Method according to Claims 17 and 18, including the following steps:

   l) determining an overall grade on the basis of the first, second and third grades determined in steps h), j) and k),
   m) displaying this overall grade.

20. Device for assisting in energy-efficient driving of a motor vehicle, including a receiver designed to receive the signals originating from at least one sensor on board the vehicle, a computerized control unit programmed to implement the driving assistance method according to any one of the preceding claims on the basis of the signals received by said receiver, and means for displaying the information determined using this method.

# Fig.1

# Fig.2

# Fig.3

# Fig.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2010041750 A

- US 4335429 A